# FASCICULE DE BREVET EUROPEEN

(11) **EP 3 967 132 B1**
(45) Date de publication et mention de la délivrance du brevet: **07.06.2023**
(21) Numéro de dépôt: 21196218.8
(22) Date de dépôt: 13.09.2021
(51) Int. Cl.: A01F 25/20, A01K 5/00

(54) **PROCÉDÉ PERMETTANT UNE DÉTECTION FIABLE DU BORD SUPÉRIEUR DU FRONT D'ATTAQUE D'UN TAS DE PRODUIT(S) POUR L'ALIMENTATION ANIMALE, À PARTIR D'UN VÉHICULE DE PRÉLÈVEMENT ET UN TEL VÉHICULE PERMETTANT LA MISE EN OEUVRE DUDIT PROCÉDÉ**
VERFAHREN ZUR ZUVERLÄSSIGEN ERFASSUNG DER OBERKANTE DER VORDERSEITE EINES FUTTERMITTELHAUFENS FÜR TIERE VON EINEM ENTNAHMEFAHRZEUG AUS UND ENTSPRECHENDES FAHRZEUG ZUR DURCHFÜHRUNG DIESES VERFAHRENS
METHOD FOR RELIABLE DETECTION OF THE UPPER EDGE OF THE LEADING FACE OF A PILE OF PRODUCT(S) FOR ANIMAL FEED, FROM A SAMPLING VEHICLE AND SUCH A VEHICLE SUITABLE FOR IMPLEMENTING SAID METHOD

(30) Priorité: 14.09.2020 FR 2009281
(43) Date de publication de la demande: 16.03.2022
(73) Titulaire: Kuhn-Audureau SAS, 85260 La Copechagnière (FR)
(72) Inventeur: LEGRAND, Adrien, 85000 LA ROCHE-SUR-YON (FR); GUIDAULT, Léandre, 85000 LA ROCHE SUR YON (FR)
(74) Mandataire: Cabinet Nuss

(56) Documents cités:
- EP-A1- 3 023 004
- EP-A1- 3 633 110
- DE-B3-102012 107 508
- FR-A1- 3 082 699

## Description

La présente invention concerne le domaine du machinisme agricole, et plus particulièrement les machines/véhicules de prélèvement pour le chargement et/ou la distribution de produit(s) destinés à l'alimentation animal et a pour objet un procédé permettant une détection fiable du bord supérieur du front d'attaque d'un tas de produit(s) pour l'alimentation animale, à partir d'un véhicule de prélèvement. Elle a également pour objet un tel véhicule permettant la mise en oeuvre dudit procédé.

Un véhicule de prélèvement, également connu sous le nom de désileuse, est un engin agricole mobile servant à prélever ou à charger au moins un produit, tel que du fourrage, stocké ou emmagasiné sous la forme d'un tas de produit(s), généralement entreposé dans un silo, en vue de sa distribution aux animaux pour leur alimentation. Généralement, ce type de véhicule permet également de distribuer le(s) produit(s) prélevé(s) aux animaux.

La face verticale du tas de produit(s) dans laquelle est effectuée le prélèvement est communément appelée front d'attaque et est délimitée à sa partie supérieure par un bord supérieur qui constitue un point de départ du prélèvement.

Un tel véhicule de prélèvement comprend un châssis supportant une cuve apte à recevoir le produit prélevé et un bras de prélèvement permettant le prélèvement et le chargement du produit dans la cuve. Généralement, la cuve est équipée d'un dispositif mélangeur permettant de mélanger le(s) produit(s) prélevé(s) avant sa(leur) distribution et comprend en outre des moyens de distribution permettant de distribuer le(s) produit(s) contenu(s) dans ladite cuve.

Le bras de chargement comprend un outil de prélèvement permettant de prélever le produit dans le tas de produit(s) et un dispositif de transfert assurant le transport du produit prélevé par ledit outil de prélèvement jusque dans la cuve. L'outil de prélèvement consiste généralement en une fraise rotative qui s'étend horizontalement et perpendiculairement à l'axe longitudinal du véhicule agricole et au bras de chargement. Le dispositif de transfert consiste généralement en un convoyeur à tapis ou à bande apte à recevoir le produit prélevé et expulsé par la fraise rotative et à le transporter, par son déplacement, le long du bras de chargement jusque dans la cuve.

Le bras de chargement est mobile verticalement depuis une position basse jusqu'à une position haute et réciproquement de sorte à pouvoir positionner l'outil de prélèvement à des hauteurs différentes sur toute la hauteur du front d'attaque de sorte à pouvoir réaliser le prélèvement au niveau de son bord supérieur. Il est généralement monté à cet effet sur le châssis et/ou sur la cuve en pivotement et/ou en translation en étant actionné au moyen d'un ou plusieurs actionneurs tels qu'au moins un vérin hydraulique.

Un tel véhicule de prélèvement est automoteur ou porté/tracté par un véhicule tracteur. Dans le cas où il est automoteur, celui-ci fonctionne de manière autonome, c'est-à-dire de manière robotisé ou automatique sans intervention humaine, ou de manière non autonome, c'est-à-dire en étant équipé d'un poste de conduite commandé par une personne et monté sur le châssis automoteur. Le châssis du véhicule de prélèvement automoteur est monté sur des roues pour permettre son déplacement sur le sol.

Toutefois, un problème rencontré lors du fonctionnement des véhicules de prélèvement, notamment dans le cas où ces véhicules sont autonomes, est la présence d'un obstacle, tel qu'une personne ou un animal, sur le tas de produit(s) susceptible d'être en contact avec l'outil de prélèvement lorsque celui-ci est en position haute pour attaquer le bord supérieur du front d'attaque du tas de produit(s). En effet, par exemple, les tas de produit(s), tel que les tas de fourrage réalisés par ensilage, sont tassés pour chasser le maximum d'air de sorte à maintenir une bonne conservation du fourrage en évitant la détérioration de ses valeurs alimentaires et sont recouverts d'une ou plusieurs bâches, généralement en plastique, pour maintenir le fourrage tassé et le protéger. Des éléments de lestage tels que des pneus, boudins ou tapis sont en outre posés sur la ou les bâches afin d'empêcher son/leur soulèvement par le vent qui laisserait passer l'air avec pour effet la détérioration le fourrage. Au fur et à mesure de la consommation de fourrage, c'est-à-dire du prélèvement/chargement par le véhicule de prélèvement, il est alors nécessaire de reculer la ou les bâche(s) après avoir en enlever les éléments de lestage correspondants. Cette dernière opération est réalisée manuellement par l'intervention d'une ou plusieurs personnes présente(s) sur le tas de fourrage et se déplaçant sur celui-ci.

Le document EP3023004 a pour objet un véhicule de prélèvement et plus particulièrement un tel véhicule fonctionnant de manière autonome et comprenant des capteurs et/ou scanners d'acquisition de données et un ordinateur permettant d'analyser lesdites données pour en déduire la présence d'une personne entre l'outil de prélèvement et le front d'attaque et dans ce cas de commander une alarme et/ou de désactiver les systèmes tels que l'outil de prélèvement. Plus particulièrement, l'ordinateur détermine un nuage de points tridimensionnels qui représente l'environnement et qui se compose de points individuels dont chaque position est définie par une coordonnée de point. Le nuage représente les points individuels des objets statiques, dynamiques et variables détectés par le scanner et/ou le capteur qui ont été déterminés à un moment précis.

Toutefois, ce type de véhicule autonome décrit dans le document EP3023004, d'une part, n'est pas prévu spécifiquement pour détecter un obstacle présent sur le tas de produit(s) et, d'autre part, utilise des moyens de calculs informatique puissants et nécessitent des opérations informatiques complexes à partir de programmes ou logiciels spécifiques. En outre, ces programmes ou logiciels ne donnent pas toujours la même information, c'est-à-dire une information fiable sur la hauteur du tas de produit(s) et rendent complexe l'analyse des données, ce qui augmente également le coût du système.

La présente invention a pour but de pallier ces inconvénients en proposant un procédé permettant une détection fiable du bord supérieur du front d'attaque d'un tas de produit(s) pour l'alimentation animale, à partir d'un véhicule de prélèvement et un tel véhicule de prélèvement permettant la mise en oeuvre dudit procédé, ledit procédé et ledit véhicule de prélèvement permettant d'obtenir une information fiable sur la hauteur du bord supérieur du front d'attaque avec une analyse simple des données et un coût de revient faible.

A cet effet, le procédé, selon la présente invention, permettant une détection fiable du bord supérieur du front d'attaque d'un tas de produit(s) pour l'alimentation animale, à partir d'un véhicule de prélèvement comprenant un châssis supportant, à l'avant dudit véhicule, un bras de prélèvement mobile verticalement et muni d'un outil de prélèvement, se caractérise essentiellement en ce qu'il consiste, à partir du véhicule comprenant en outre au moins deux capteurs de mesure orientés chacun vers l'avant du véhicule suivant un axe de mesure passant à côté de l'outil de prélèvement et à partir d'une unité de traitement électronique :
- dans une première étape : à positionner le véhicule devant le front d'attaque de sorte que l'outil de prélèvement soit en regard du front d'attaque,
- dans une deuxième étape : à commander de manière continue le déplacement vers le haut du bras de prélèvement tout en balayant verticalement le plan du front d'attaque avec les axes de mesure de manière coordonnée avec le déplacement du bras de prélèvement pour détecter le bord supérieur au moment où l'outil de prélèvement atteint ou atteint sensiblement la hauteur de ce dernier et tout en réalisant à chaque instant, selon une fréquence prédéterminée, à l'aide de chaque capteur de mesure, une mesure ponctuelle fournissant une information tout ou rien, à savoir une information de présence ou d'absence de cible sur l'axe de mesure correspondant, l'information d'absence de cible correspondant à ladite détection du bord supérieur,
- dans une troisième étape : dès qu'au moins une information d'absence de cible est acquise, à commander l'arrêt du déplacement du bras de prélèvement,
- dans une dernière étape : à commander l'actionnement de l'outil de prélèvement en vue du prélèvement.

Le véhicule de prélèvement, selon la présente invention, pour le prélèvement du ou des produit(s) dans un tas de produit(s) pour l'alimentation animale, ledit tas de produit(s) présentant un front d'attaque comportant un bord supérieur, ledit véhicule de prélèvement permettant la mise en oeuvre du procédé selon la présente invention et comprenant un châssis supportant, à l'avant dudit véhicule, un bras de prélèvement mobile verticalement et muni d'un outil de prélèvement, se caractérise essentiellement en ce qu'il comprend en outre une chaîne d'acquisition comprenant au moins deux capteurs de mesure orientés chacun vers l'avant du véhicule suivant un axe de mesure passant à côté de l'outil de prélèvement et montés de sorte à permettre aux axes de mesure de suivre le déplacement du bras de prélèvement de manière coordonnée et une unité traitement électronique configurée pour traiter les informations provenant des capteurs de mesure de sorte à pouvoir, à partir du positionnement du véhicule devant le front d'attaque de sorte que l'outil de prélèvement soit en regard du front d'attaque :
- commander de manière continue le déplacement vers le haut du bras de prélèvement tout en balayant verticalement le plan du front d'attaque avec les axes de mesure de manière coordonnée avec le déplacement dudit bras de prélèvement pour détecter le bord supérieur au moment où l'outil de prélèvement atteint ou atteint sensiblement la hauteur de ce dernier et tout en réalisant à chaque instant, selon une fréquence prédéterminée, à l'aide de chaque capteur de mesure, une mesure ponctuelle fournissant une information tout ou rien, à savoir une information de présence ou d'absence de cible sur l'axe de mesure correspondant, ladite information d'absence de cible correspondant à ladite détection du bord supérieur,
- dès qu'au moins une information d'absence de cible est acquise, pour commander l'arrêt du déplacement du bras de prélèvement,
- puis pour commander l'actionnement de l'outil de prélèvement en vue du prélèvement.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente une vue en perspective d'un véhicule de prélèvement selon la présente invention, dans une forme de réalisation autonome et positionné, selon la première étape du procédé, devant le front d'attaque d'un tas de produit(s) à prélever, avec le bras de prélèvement dans une position basse et l'outil de prélèvement à l'arrêt, dans un mode de réalisation préférentielle avec les capteurs de mesure solidaires du bras de prélèvement en étant montés sur ce dernier,
[Fig. 2] montre le véhicule de prélèvement autonome représenté sur la figure 1 avec le bras de prélèvement déplacé dans une position haute correspondant à l'acquisition d'au moins une information d'absence de détection, c'est-à-dire par au moins l'un des capteurs de mesure,
[Fig. 3] montre une vue de dessus du véhicule de prélèvement représenté sur la figure 1,
[Fig. 4] montre une de face de la partie avant du véhicule de prélèvement comprenant le bras de prélèvement et représenté sur la figure 1 avec plusieurs positions possibles des capteurs de mesure,
[Fig. 5] représente un schéma fonctionnel de la chaine d'acquisition.

Les figures annexées montrent un véhicule 1 de prélèvement, selon la présente invention, pour le prélèvement ou le chargement du ou des produit(s) F dans un tas de produit(s) F pour l'alimentation animale, ledit tas de produit(s) F présentant un front d'attaque F1 comportant un bord supérieur F10, ledit véhicule 1 comprenant un châssis 1a supportant, à l'avant du véhicule 1, un bras de prélèvement 1b mobile verticalement et muni d'un outil de prélèvement 10b. Un tel véhicule 1 est, par exemple, décrit et illustré dans le document de brevet FR3082699 déposé par la présente demanderesse.

Conformément à la présente invention, un tel véhicule 1 permet la mise en oeuvre du procédé selon la présente invention et comprend en outre à cet effet une chaîne d'acquisition 2, 3, 4 comprenant au moins deux capteurs de mesure 2 orientés chacun vers l'avant du véhicule 1 suivant un axe de mesure M1, M2 passant à côté de l'outil de prélèvement 10b et montés dans ledit véhicule 1 de sorte à permettre aux axes de mesures M1, M2 de suivre le déplacement du bras de prélèvement 1b de manière coordonnée et une unité traitement électronique 4.

Toujours conformément à la présente invention, l'unité de traitement électronique 4 est configurée pour traiter les informations provenant des capteurs de mesure 2 de sorte à pouvoir, à partir du positionnement du véhicule 1 devant le front d'attaque F1 de sorte que l'outil de prélèvement 10b soit en regard du front d'attaque F1 :
- commander de manière continue le déplacement vers le haut du bras de prélèvement 1b tout en balayant verticalement le plan du front d'attaque F1 avec les axes de mesure M1, M2 de manière coordonnée avec le déplacement dudit bras de prélèvement 1b pour détecter le bord supérieur F10 au moment où l'outil de prélèvement 10b atteint ou atteint sensiblement la hauteur de ce dernier et tout en réalisant à chaque instant, selon une fréquence prédéterminée, à l'aide de chaque capteur de mesure 2, une mesure ponctuelle fournissant une information tout ou rien, à savoir une information de présence ou d'absence de cible F1, P sur l'axe de mesure M1, M2 correspondant, ladite information d'absence de cible F1, P correspondant à ladite détection du bord supérieur F10,
- dès qu'au moins une information d'absence de cible F1, P est acquise, pour commander l'arrêt du déplacement du bras de prélèvement 1b,
- puis pour commander l'actionnement de l'outil de prélèvement 10b en vue du prélèvement.

On entend par axe de mesure M1, M2 passant à côté de l'outil de prélèvement 10b, un axe de mesure M1, M2 passant au-dessus, au-dessous ou à côté d'un côté latéral de l'outil de prélèvement 10b, de préférence, pour chaque cas, en passant à proximité de l'outil de prélèvement 10b.

On comprend que ladite cible F1, P est, selon la hauteur du bras de prélèvement 1b, soit le front d'attaque F1, soit un obstacle P situé dans la continuité verticale du front d'attaque F1 sur son bord supérieur F10 et que l'information d'absence de cible F1, P correspondant à la détection du bord supérieur F10 signifie la détection d'une absence de cible F1, P sur l'axe de mesure M1, M2 concerné au moment où l'outil de prélèvement 10b a atteint ou a atteint sensiblement la hauteur du bord supérieur F10.

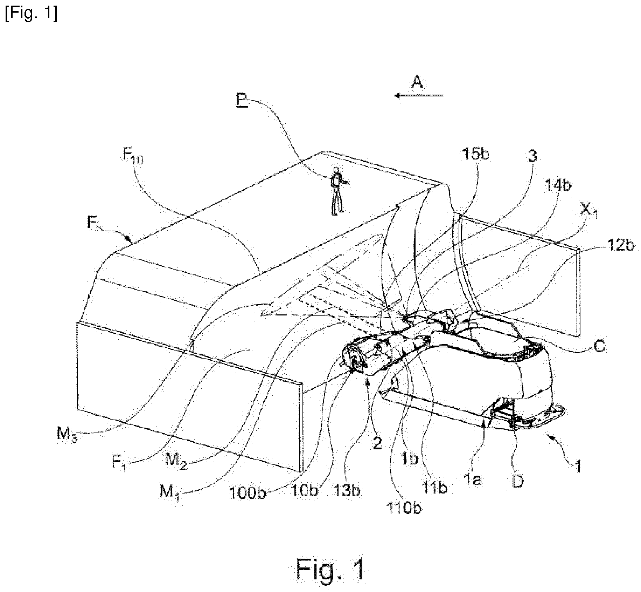

Dans une forme de réalisation préférentielle, comme on peut le voir sur les figures 1 à 3, du montage des capteurs de mesure 2 dans le véhicule 1 pour permettre aux axes de mesure M1, M2 de suivre le déplacement du bras de prélèvement 1b de manière coordonnée, les capteurs de mesure 2 peuvent être solidaires du bras de prélèvement 1b, c'est-à-dire être montés fixement ou de manière mobile sur ce dernier, les axes de mesure M1, M2 suivant alors naturellement le déplacement du bras de prélèvement 1b. Dans une autre forme de réalisation, non représentée sur les figures annexées, les capteurs de mesure 2 peuvent être montés en dehors du bras de prélèvement 1b, par exemple sur le châssis 1a ou sur la cuve C, et être chacun rendu mobile, par exemple au moyen d'une tête support rotative ou monté en translation verticale, de sorte à pouvoir commander le déplacement des axes de mesures M1, M2 de manière coordonnée avec le déplacement du bras de prélèvement 1b depuis un point du véhicule 1 situé en dehors dudit bras de prélèvement 1b.

Dans la présente invention on entend par obstacle P, par exemple, une personne ou un animal, et notamment une telle personne, ou animal, présente, ou se déplaçant, sur le sommet du tas de produit(s) F.

De préférence, la chaîne d'acquisition 2, 3, 4 peut comprendre en outre un capteur de position permettant de déterminer continuellement la hauteur de bras de prélèvement 1b lors de son déplacement vertical et l'unité de traitement électronique 4 peut alors être configurée pour mémoriser la hauteur du bras de prélèvement 1b à l'instant où est acquise au moins une information de détection d'absence de cible F1, P. Dans le cas où le bras de prélèvement 1b est monté en pivotement comme on le verra par la suite la mémorisation de la hauteur du bras de prélèvement peut consister à mémoriser par exemple une hauteur ou un angle de pivotement de ce dernier. Ainsi, lors d'un autre passage pour le prélèvement, le véhicule 1 ne sera pas obligé de réitérer les étapes de détection du bord supérieur, mais commandera le déplacement du bras de prélèvement 1b directement à la hauteur mémorisée. D'une manière avantageuse, lorsque le véhicule 1 devra se décaler latéralement pour poursuivre le chargement de produit, les étapes de détection du bord supérieur F10 ne seront pas réitérées si l'opération de repositionnement du véhicule 1 et de déplacement vertical du bras de prélèvement 1b ont lieu dans un intervalle de temps court, par exemple inférieur à une ou deux minutes. Cet intervalle de temps peut être réglable et peut être enregistré dans l'unité de traitement électronique 4.

Pour améliorer la sécurité de l'opération de prélèvement, c'est-à-dire le risque d'accident lors de l'actionnement de l'outil de prélèvement 10b au niveau du bord supérieur F10 du tas de produit(s) F, la présente invention peut prévoir que la chaîne d'acquisition 2, 3, 4 comprenne en outre au moins un capteur de détection de présence 3 pour pouvoir détecter la présence d'un obstacle P, tel qu'une personne ou un animal, sur le tas de produit(s) F. L'unité de traitement électronique 4 peut alors être configurée pour, après avoir commandé l'arrêt du déplacement du bras de prélèvement 1b, commander, à l'aide du ou de chaque capteur de présence 3, la détection d'une présence d'obstacle P sur le tas de produit(s) F et si, aucun obstacle P n'est détecté, pour commander l'actionnement de l'outil de prélèvement 10b.

Dans un mode de réalisation particulier, une mesure ponctuelle peut être une mesure de distance entre un point de la cible F1, P et le capteur de mesure 2 correspondant. Chaque capteur de mesure 2 peut être un capteur de mesure 2 de distance. En outre, la chaîne d'acquisition 2, 3, 4 peut être configurée pour que chaque information tout ou rien soit déterminée en calculant la différence entre la distance mesurée à un instant donné avec la distance mesurée à l'instant précédent, puis en comparant le résultat de ladite différence avec une valeur de variation de distance de référence, puis en fournissant, si le résultat est inférieur à ladite valeur de variation de distance de référence, une information de présence de cible F1, P et, si le résultat est supérieur ou égal à ladite valeur de variation de distance de référence, une information d'absence de cible F1, P.

L'axe de mesure M1, M2 de chaque capteur de mesure 2 est défini par l'axe du rayonnement, c'est-à-dire par un rayonnement électromagnétique ou acoustique, émis par le capteur de mesure 2.

Dans une forme de réalisation préférentielle de chaque capteur de mesure 2 de distance, celui-ci peut être, par exemple, un appareil du type télémètre laser. Un tel appareil permet de projeter sur la cible F1, P se trouvant dans l'axe de mesure M1, M2 un rayon laser qui est renvoyé vers l'appareil et le temps mis par le rayon pour revenir est mesuré, ce qui permet de calculer la distance entre l'appareil et la cible F1, P, par exemple à l'aide de l'unité de traitement électronique 4 ou d'un circuit électronique intégré dans l'appareil et relié à ladite unité de traitement électronique 4.

Pour ce qui concerne la réalisation à chaque instant, selon une fréquence prédéterminée, à l'aide de chaque capteur de mesure 2, des mesures ponctuelles, ladite fréquence prédéterminée dépend de la technologie du capteur de mesure 2 choisi.

Le ou chaque capteur de détection de présence 3 peut consister en un appareil du type, par exemple, Radar, capteur à ultrason, caméra ou capteur LIDAR. Le ou chaque capteur de détection de présence 3 est configuré et positionné pour que le champ de détection M3 couvre une zone située au-dessus du tas de produit(s) F lorsque l'outil de prélèvement 10b atteint ou va atteindre le niveau du bord supérieur F10 du bord d'attaque F1. Le capteur de détection de présence 3 peut être monté fixement sur le bras de prélèvement 1b ou de manière mobile de sorte à pouvoir orienter ou balayer le champ de détection M3 dudit capteur de détection de présence 3 dans la zone de détection au-dessus du tas de produit(s) pour couvrir cette dernière. La zone de détection autour du tas de produit(s) et notamment sur le tas de produit(s) est ainsi élargie grâce au capteur de détection de présence 3. Le risque d'accident au niveau du tas de produit(s) plus particulièrement au niveau du bord supérieur F10 lors de l'actionnement de l'outil de prélèvement 10b sera très limité voire inexistant.

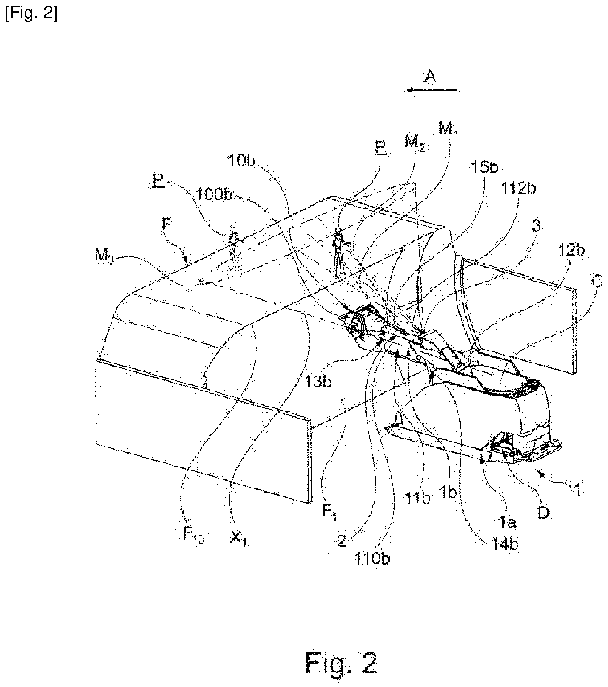

Si on se réfère à la figure 2 on peut voir que l'unité de traitement 4 a commandé la détection de présence à l'aide du capteur de détection de présence 3 et que deux personnes P, l'une située sur le bord supérieur F10 et l'autre située en retrait dudit bord supérieur F10, sont situées dans le champ de détection M3 du capteur de détection de présence 3. On peut voir également que la personne P située sur le bord supérieur F10, c'est-à-dire dans le plan du front d'attaque F1 et dans la continuité verticale du front d'attaque F1, est située sur l'un des axes de mesure M1 de l'un des capteurs de mesure 2 mais pas sur l'autre axe de mesure M2 de l'autre capteur de mesure 2, ceci du fait de l'écartement prédéfini entre les deux capteurs de mesure 2 pour éviter qu'un obstacle P, ainsi situé, se trouve simultanément sur les deux axes de mesure M1, M2. Pour ce qui concerne cette dernière personne P, le fait qu'elle soit située sur l'un des axes de mesure M1 et non sur l'autre axe de mesure M2 en même temps permet de discriminer cette personne P par rapport au front d'attaque F1 lors de la détection du bord supérieur F10 puisque l'un au moins des deux capteurs de mesure 2 permet l'acquisition d'une information d'absence de cible F1, P.

Si on se réfère aux figures 1 à 4, on peut voir que les capteurs de mesure 2 sont configurés et positionnés sur le véhicule 1 pour que leur axe de mesure M1 et M2 respectif soit orienté vers le tas de produit(s) F ou vers l'avant compte tenu de la direction d'avance A du véhicule 1. Le bras de prélèvement 1b est disposé à l'avant du véhicule 1. Les axes de mesure M1 et M2 sont dirigés vers le front d'attaque F1 ou le plan du front d'attaque F1 lorsque le bras de prélèvement 1b est dans sa position basse comme dans sa position haute.

Les deux capteurs de mesure 2 peuvent être disposés sur le bras de prélèvement 1b de manière symétrique par rapport à un plan vertical médian passant par l'axe X1 du bras de prélèvement 1b. Cette caractéristique permet ou a comme avantage d'obtenir simultanément, ou avec un décalage temporel faible, la détection du bord supérieur F10 du front d'attaque F1. Cette caractéristique, par le fait qu'il n'y a pas de décalage de position des capteurs de mesure 2 sur le bras de prélèvement 1b, permet également une gestion simplifiée, évitant ainsi par exemple à gérer une compensation de ce décalage. Ces avantages permettent d'obtenir des mesures plus fiables et plus sûres.

Selon une alternative non représentée, la chaine d'acquisition est configurée pour comprendre trois capteurs de mesure 2. Le troisième capteur de mesure 2 peut alors être positionné entre les deux capteurs de mesure 2 disposés de manière symétrique. Ce troisième capteur de mesure 2 pourra être placé, par exemple, sur l'axe X1 du bras de prélèvement 1b et être décalé en dessous ou au-dessus de l'axe passant par les capteurs de mesure 2. Ce troisième capteur de mesure 2 supplémentaire permet d'augmenter la fiabilité.

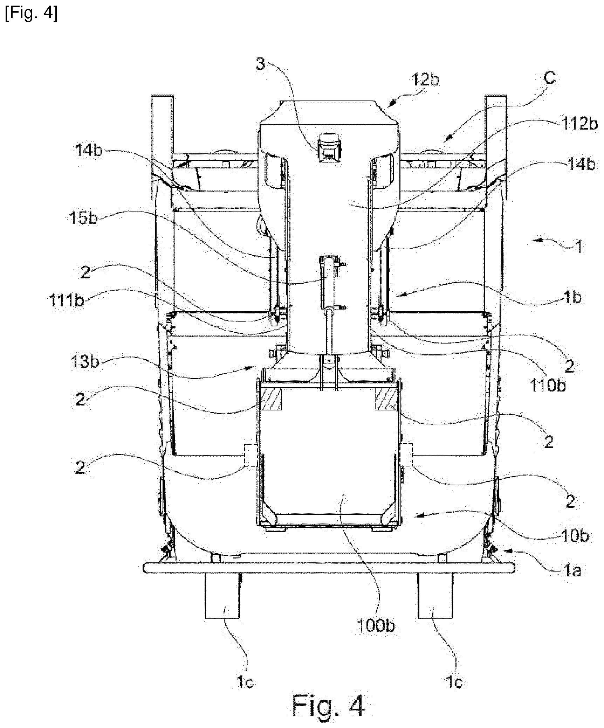

D'une manière alternative, les deux capteurs de mesure 2 peuvent être disposés sur l'outil de prélèvement 10b, de préférence sur les flancs de l'outil de prélèvement 10b tel que représenté en traits interrompus sur la figure 4. En étant positionné sur la partie supérieure des flancs, les capteurs de mesure 2 sont plus éloignés l'un de l'autre et le risque de confusion d'un obstacle P avec le bord supérieur F10 est limité. Cette position plus proche du front d'attaque F1 et donc plus exposée au produit à charger/prélever, implique que les capteurs de mesure 2 sont, de préférence, montés ou protégés par un boîtier renforcé dont au moins une face est transparente pour laisser passer les axes de mesure M1, M2. La présente invention peut prévoir de monter les capteurs de mesure 2 sur le bras de prélèvement 1b de manière mobile en translation pour pouvoir régler leur écartement et les écarter suffisamment l'un de l'autre pour réduire le risque de confusion évoqué précédemment lorsqu'un obstacle se trouve sur le bord supérieur F10.

On peut voir également sur les figures 1 et 2 que les axes de mesure M1, M2 des capteurs de mesure 2 peuvent être orientés en passant au-dessus de l'outil de prélèvement 10b. Les axes de mesure M1, M2, comme on peut le voir encore sur ces figures, peuvent être inclinés par rapport à l'axe X1 du bras de prélèvement 1b.

On comprend que, lorsque les axes de mesure M1, M2 sont orientés au-dessus ou en dessous de l'outil de prélèvement 10b, il se produit un décalage de hauteur entre la cible F1, P pointée par lesdits axes de mesure M1, M2 et l'outil de prélèvement 10b de sorte que les axes de mesure M1, M2 interceptent le bord supérieur F10 du front d'attaque F1 du tas de produit(s) F avant ou après que l'outil de prélèvement 10b ne soit à la même hauteur que ledit bord supérieur F10. Ainsi, la présente invention peut prévoir que l'unité de traitement électronique 4 soit configurée pour commander en outre un déplacement supplémentaire du bras de prélèvement 1b vers le haut ou vers le bas pour ajuster la hauteur de l'outil de prélèvement 10b suite audit décalage en l'amenant à la hauteur du bord supérieur F10. Cette commande d'ajustement peut être réalisée lors de l'acquisition d'au moins une information d'absence de cible F1, P de sorte à commander l'arrêt du déplacement du bras de prélèvement 1b dès que l'ajustement est effectué.

D'autre part, on comprendra que la hauteur du bord supérieur F10 du tas de produit(s) F à partir duquel est effectué le prélèvement peut varier entre deux passages de prélèvement du véhicule 1. En effet, le véhicule 1 peut, lors d'un premier ou précédent passage de prélèvement, ne pas avoir prélevé, lors de l'abaissement de l'outil de prélèvement 1b depuis le bord supérieur F10 vers le sol, toute la hauteur du front d'attaque F1, en laissant alors un bord supérieur F10 intermédiaire situé à une hauteur intermédiaire entre celle du bord supérieur F10 initial et le sol. Grâce à un tel véhicule 1 selon la présente invention, l'outil de prélèvement 10b, lors d'un deuxième ou ultérieur passage de prélèvement destiné à prélever la hauteur restante de produit(s) depuis ledit bord supérieur F10 intermédiaire, peut alors être déplacé et guidé, par l'intermédiaire du déplacement du bras de prélèvement 1b, à la hauteur dudit bord supérieur F10 intermédiaire puisque ce dernier pourra à nouveau être détecté par le véhicule 1.

De préférence, comme on peut le voir sur les figures annexées, les deux capteurs de mesure 2 sont orientés et espacés l'un de l'autre, de préférence d'une distance comprise, par exemple, entre 400 mm et 2500 mm, préférentiellement de l'ordre de 500mm, de sorte qu'une cible P formée par un obstacle, tel qu'une personne ou un animal, situé sur le bord supérieur F10 et sur l'axe de mesure M1, M2 de l'un des capteurs de mesure 2, ne puisse pas être située en même temps sur l'axe de mesure M1, M2 de l'autre ou des autres capteur(s) de mesure 2, c'est-à-dire détectée simultanément par l'autre ou les autres capteur(s) de mesure 2. Cette caractéristique, comme vu précédemment, permet d'éviter de confondre un obstacle P situé sur le bord supérieur F10, c'est-à-dire dans la continuité verticale du front d'attaque F1, avec le front d'attaque F1. Cette caractéristique permet ainsi plus particulièrement d'éviter que cet obstacle P ne soit détecté par tous les capteurs de mesure 2. En effet, dans ce cas aucune information d'absence de cible F1, P ne pourrait alors être acquise avant que les axes de mesure M1, M2 ne passent au-dessus dudit obstacle P de sorte que le bras de prélèvement 1b serait arrêté à une hauteur trop élevée positionnant l'outil de prélèvement 10b nettement au-dessus du bord supérieur F10, entraînant une perte de temps et donc d'énergie du fait d'un mauvais positionnement de l'outil de prélèvement 10b. En outre dans ce cas, la hauteur du bras de prélèvement 1b pourrait entraîner un problème de détection des obstacles P par le ou chaque capteur de détection de présence 3 qui ne serait pas orienté dans la bonne direction, lesdits obstacles P n'étant alors pas détectés.

Le bras de prélèvement 1b peut comprendre au moins deux faces latérales opposés. En outre, l'un des capteurs de mesure 2 peut être positionné sur l'une desdites faces latérales et l'autre capteur de mesure 2 peut être positionné sur l'autre face latérale. Cette caractéristique permet ou a comme avantage de permettre une protection des capteurs de mesure 2 en empêchant, par exemple, qu'un objet tombant sur le bras de prélèvement 1b heurte l'un des capteurs de mesure 2, évitant ainsi l'endommagement des capteurs de mesure 2 par la chute ou la projection d'objets sur le bras de prélèvement 1b. De plus la mesure de la hauteur ou la détection du bord supérieur 10b est d'autant plus fiable qu'elle couvre toute la largeur du bras de prélèvement 1b.

De manière connue, comme on peut le voir sur les figures 1 à 4, le véhicule 1 peut comprendre une cuve C supportée par le châssis 1a et le bras de prélèvement 1b peut comprendre un dispositif de transfert 11b permettant de déplacer le produit F prélevé par l'outil de prélèvement 10b jusque dans la cuve C. Le dispositif de transfert 11b peut être délimité latéralement le long de l'axe X1 du bras de prélèvement 1b par deux faces latérales 110b, 111b opposées. L'un des capteurs de mesure 2 peut alors être positionné sur l'une des faces latérales 110b et l'autre capteur de mesure 2 peut être positionné sur l'autre face latérale 111b. Cette caractéristique permet ou a comme avantage d'obtenir une mesure fiable, sûre. Le cas échéant lesdites faces latérales 110b, 111b pouvant former au moins en partie les faces latérales du bras de prélèvement 1b.

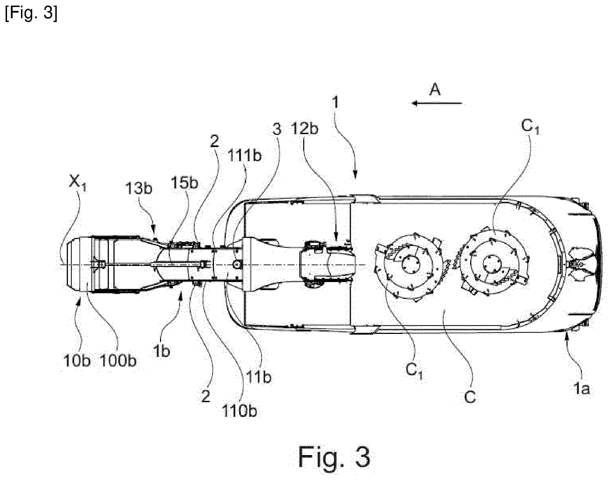

La cuve C peut comprendre, de manière connue, un dispositif mélangeur C1 comprenant au moins une vis mélangeuse. Elle peut également être en outre équipé, comme on peut le voir sur les figures 1 et 2, de manière connue, d'un système de distribution D permettant la distribution du ou des produits F contenu(s) dans la cuve C. La cuve C peut comprendre, par exemple, deux dispositifs mélangeur C1 comme on peut le voir sur la figure 3.

Le châssis 1a peut être monté sur des roues 10a afin de permettre son déplacement sur le sol. Les roues 10a peuvent également être d'autres dispositifs qui permettent au véhicule de reposer sur le sol et de s'y mouvoir.

Le bras de chargement 1b peut comprendre une face supérieure reliant les faces latérales sur lesquelles sont positionnés les capteurs de mesure 2 et en ce que les capteurs de mesure 2 sont positionnés à proximité de ladite face supérieure. Cette caractéristique permet ou a comme avantage d'anticiper ou de mieux anticiper la détection du bord supérieur F10 lors de la montée du bras de prélèvement 1b et donc de gagner du temps.

Dans une forme préférentielle et connue du déplacement et du montage du bras de prélèvement 1b sur le châssis 1a, ledit bras de prélèvement 10b est monté en pivotement sur la cuve C (voir notamment les figures 1 à 4) et/ou sur le châssis 1a. Le bras de prélèvement 10b comprend à cet effet une extrémité proximale 12b articulée sur la cuve C et/ou sur le châssis 1a, une extrémité distale 13b sur laquelle est monté l'outil de prélèvement 10b et au moins un actionneur 14b pour actionner ledit pivotement. Dans cette forme de réalisation, notamment, la présente invention peut prévoir que les capteurs de mesure 2 soient disposés, comme on peut le voir sur les figures 1 à 4, de sorte à être plus proche de l'extrémité distale 13b que de l'extrémité proximale du bras de prélèvement 1b, de préférence à proximité de l'extrémité distale 13b. Les capteurs de mesure 2 sont disposés de manière à pourvoir détecter le front d'attaque F1 du tas de produit(s) F et notamment de balayer verticalement le front d'attaque F1 avec les axes de mesure M1, M2 respectifs.

L'outil de prélèvement 10b peut comprendre un capot de protection 100b qui peut être monté pivotant sur le bras de prélèvement 1b en étant articulé sur ce dernier de sorte à protéger l'outil de prélèvement 10b lorsqu'il n'est pas utilisé. L'actionnement ou l'ouverture du capot de protection peut être réalisé au moyen d'un actionneur 15b (figures 1 à 4). Selon une autre alternative, comme on peut le voir sur la figure 4, les capteurs de mesure 2 peuvent être fixés sur le capot de protection 100b, de préférence sur la face supérieure dudit capot de protection 100b (selon leur représentation en traits hachurés). Le capot de protection 100b peut occuper deux positions, à savoir une position fermée et une position ouverte. La position fermée a pour fonction de protéger l'outil de prélèvement 10b et la position escamotée a pour fonction de permettre à l'outil de prélèvement 10b de réaliser le prélèvement/chargement du produit. Le capot de protection 100b est ainsi escamoté quand l'outil de prélèvement 10b est actionné et que le prélèvement a lieu. Les capteurs de mesure 2 peuvent être fixés, de préférence, sur la partie arrière du capot de protection 100b de manière à être un peu plus éloigné de la zone de prélèvement pour éviter de recevoir des projections de produit(s) ou autres projections.

Les actionneurs 14b, 15b peuvent être des actionneurs, bien connus dans ce domaine, du type vérins et plus spécifiquement des vérins double effet.

Un tel véhicule 1 peut être, de manière connue, automoteur ou porté/tracté par un véhicule tracteur (non représenté). Dans le cas où il est automoteur, celui-ci peut fonctionner de manière autonome, c'est-à-dire de manière robotisé ou automatique sans intervention humaine (figures annexées), ou de manière non autonome, c'est-à-dire avec un poste de conduite qu'il peut comprendre en outre, commandé par une personne présente dans ledit poste de conduite.

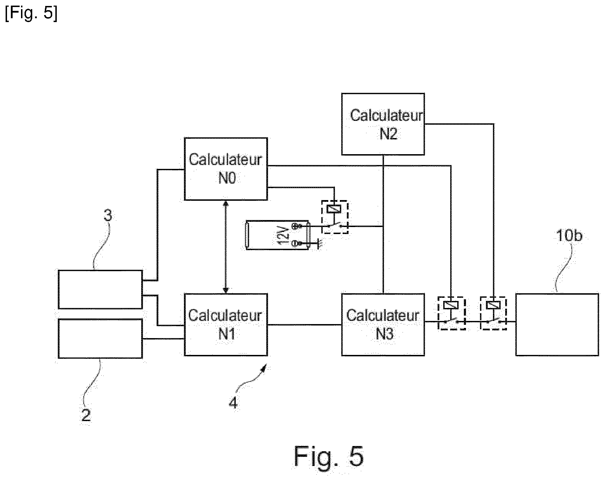

Comme on peut le voir sur la figure 5, l'unité de traitement électronique 4 peut comprendre au moins un microprocesseur, microcontrôleur ou calculateur N0, N1, N2, N3 pour traiter les données reçues des capteurs de mesure 2, le cas échéant du ou des capteur(s) de détection de présence 3, le cas échéant du capteur de position et pour commander en fonction des résultats du traitement le ou les actionneurs 14b, le cas échant le ou les actionneurs 15b et/ou, le cas échéant le déplacement du véhicule 1, ceci en fonction des instructions données par un ou plusieurs programmes que peut comprendre ladite unité de traitement électronique 4. L'unité de traitement électronique 4 comprend une ou plusieurs mémoires permettant la mémorisation, par exemple, du ou des programmes, des données, des résultats et de la hauteur du bras de prélèvement 1b à laquelle au moins une information d'absence de cible F1, P est acquise, ainsi que de toutes les données et informations nécessaires au fonctionnement de la chaîne d'acquisition 2, 3.

La présente invention a également pour objet un procédé permettant une détection fiable du bord supérieur F10 du front d'attaque F1 d'un tas de produit(s) F pour l'alimentation animale, à partir d'un véhicule 1. Un tel véhicule 1, permettant la mise en oeuvre du procédé, peut être un véhicule 1 selon la présente invention et comprenant, comme décrit précédemment, un châssis 1a supportant à l'avant dudit véhicule 1 et un bras de prélèvement 1b mobile verticalement et muni d'un outil de prélèvement 10b.

Conformément à la présente invention, le procédé selon la présente invention consiste, à partir d'un tel véhicule 1 selon la présente invention comprenant en outre, comme décrit précédemment, au moins deux capteurs de mesure 2 orientés chacun vers l'avant du véhicule 1 suivant un axe de mesure M1, M2 passant à côté de l'outil de prélèvement 10b et à partir d'une unité de traitement électronique 4 :
- dans une première étape : à positionner le véhicule 1 devant le front d'attaque F1 de sorte que l'outil de prélèvement 10b soit en regard du front d'attaque F1,
- dans une deuxième étape : à commander de manière continue le déplacement vers le haut du bras de prélèvement 1b tout en balayant verticalement le plan du front d'attaque F1 avec les axes de mesure M1, M2 de manière coordonnée avec le déplacement du bras de prélèvement 1b pour détecter le bord supérieur F10 au moment où l'outil de prélèvement 10b atteint ou atteint sensiblement la hauteur de ce dernier et tout en réalisant à chaque instant, selon une fréquence prédéterminée, à l'aide de chaque capteur de mesure 2, une mesure ponctuelle fournissant une information tout ou rien, à savoir la présence ou l'absence d'une cible F1, P sur l'axe de mesure M1, M2 correspondant, ladite information d'absence de cible F1, P correspondant à ladite détection du bord supérieur F10. On comprend, comme déjà indiqué plus haut, que ladite cible F1, P est, selon la hauteur du bras de prélèvement 1b, soit le front d'attaque F1, soit un obstacle P situé dans la continuité verticale du front d'attaque F1 sur son bord supérieur F10 et que l'information d'absence de cible F1, P correspondant à la détection du bord supérieur F10 signifie la détection d'une absence de cible F1, P sur l'axe de mesure M1, M2 concerné au moment où l'outil de prélèvement 10b a atteint ou a atteint sensiblement la hauteur du bord supérieur F10,
- dans une troisième étape : dès qu'au moins une information d'absence de cible F1, P est acquise, à commander l'arrêt du déplacement du bras de prélèvement 1b,
- dans une dernière étape : à commander l'actionnement de l'outil de prélèvement 10b en vue du prélèvement.

Dans le but d'apporter une sécurité supplémentaire avant l'actionnement de l'outil de prélèvement 10b, une quatrième étape peut être effectuée après la troisième étape et avant la dernière étape. La quatrième étape consiste, à l'aide d'au moins un capteur de présence 3, à commander une détection de présence d'un obstacle P, tel qu'une personne ou un animal, sur le tas de produit(s) F et si aucun obstacle n'est détecté sur le tas de produit(s) F, à réaliser la cinquième étape c'est-à-dire à commander l'actionnement de l'outil de prélèvement 10b en vue du prélèvement.

Dans un mode de réalisation préférentiel, le procédé peut consister en outre, à l'aide d'un capteur de position permettant de déterminer continuellement la hauteur de bras de prélèvement 1b lors de son déplacement vertical, à mémoriser dans une mémoire de l'unité de traitement électronique 4 configurée à cet effet, la hauteur du bras de prélèvement 1b à l'instant où est acquise au moins une information de détection d'absence de cible F1, P. Le capteur de position peut être disposé fonctionnellement dans l'actionneur 14b. De manière alternative, le capteur de position peut être est disposé au niveau du pivot d'articulation du bras de prélèvement 1b et du châssis 1a du véhicule et peut être, par exemple, un capteur d'angle.

Dans le cas où les capteurs de mesure 2 sont des capteurs de mesure 2 de distance, tels que par exemple des appareils du type télémètre laser, et qu'une mesure ponctuelle est une mesure de distance entre un point de la cible F1, P et le capteur de mesure 2 de distance correspondant, le procédé peut consister, pour déterminer chaque information tout ou rien, à calculer la différence entre la distance mesurée à un instant donné avec la distance mesurée à l'instant précédent, puis à comparer le résultat de ladite différence avec une valeur de variation de distance de référence, mémorisée dans l'unité de traitement électronique 4, puis à fournir, si le résultat est inférieur à ladite valeur de variation de distance de référence, une information de présence de cible F1, P et, si le résultat est supérieur ou égal à ladite valeur de variation de distance de référence, une information d'absence de cible F1, P.

Dans le cas précédent, la valeur de variation de distance peut tenir compte du profil du front d'attaque F1, notamment lorsque celui-ci est en pente ou présente une partie inclinée ou incurvée comme on peut le voir sur les figures 1 et 2. Tel que visible sur ces figures, les côtés d'un tas de produit(s) sont généralement maintenus par un mur ou une paroi formant un silo et le tas de produit(s) F présente sur sa partie supérieure une forme arrondie pour permettre un écoulement d'eau lorsqu'il pleut. Par exemple, la valeur de variation de distance peut être comprise, de préférence, entre 150 mm et 250 mm ou être, préférentiellement de l'ordre de 200 mm.

On comprend que le plan du front d'attaque F1 selon l'invention comprend le front d'attaque F1, en pente, en partie inclinée ou incurvée, ou non, et l'espace prolongeant verticalement ledit front d'attaque F1 depuis son bord supérieur F10.

Dans le cas où le véhicule 1 est autonome, le positionnement du véhicule 1 devant le front d'attaque F1 de sorte que l'outil de prélèvement (10b) soit en regard du front d'attaque F1 (selon la première étape) peut être commandée par l'unité de traitement électronique 4 configurée à cet effet ou par une autre unité de traitement électronique que peut comprendre le véhicule 1 autonome. Dans le cas où le véhicule 1 n'est pas autonome, cette première étape peut être réalisée par le conducteur. Dans ce dernier cas, le procédé et/ou un tel véhicule 1 selon la présente invention peut présenter un intérêt notamment lorsque le conducteur ne voit pas l'obstacle P présent sur le bord supérieur F10 ou sur le tas de produit(s), par exemple, à cause du contre-jour du soleil ou d'un éclairage. Ce procédé présente encore un intérêt pour le conducteur du véhicule 1 lorsque le tas de produit(s) F est particulièrement haut et qu'un obstacle P sur le bord supérieur F10 n'est pas visible depuis le poste de conduite du véhicule 1.

Avant d'effectuer les mesures ponctuelles, c'est-à-dire avant d'effectuer les différentes étapes, la présente invention peut prévoir en outre une étape de détection d'un obstacle P, tel qu'une personne, un animal ou d'un objet, qui serait situé devant le véhicule 1 et/ou devant le ou les capteurs de mesure 2. Cette détection peut être réalisée par le ou au moins l'un des capteur(s) de détection de présence 3 ou par un autre capteur de détection de présence prévu spécifiquement pour cette détection. Ce capteur de détection spécifique, non représenté sur les figures annexées, peut par exemple être disposé sous le véhicule 1, par exemple en étant fixé sur le châssis 1a. Cette détection peut être commandée par l'unité de traitement électronique 4 configurée à cet effet et reliée audit capteur de détection spécifique.

Ainsi, grâce à un tel véhicule 1 ou au procédé selon la présente invention, il est possible d'obtenir une solution de mesure fiable de la hauteur du bord supérieur F10 du front d'attaque F1 d'un tas de produit(s) F, simple et économique, tout en assurant la sécurité de la ou des personnes P, ou d'un animal ou des animaux, présente(s) sur le tas de produit(s) F avant l'actionnement de l'outil de prélèvement 10b.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention selon les revendications annexées,

## Revendications

1. Procédé permettant une détection fiable du bord supérieur (F10) du front d'attaque (F1) d'un tas de produit(s) (F) pour l'alimentation animale, à partir d'un véhicule (1) de prélèvement comprenant un châssis (1a) supportant, à l'avant dudit véhicule (1), un bras de prélèvement (1b) mobile verticalement et muni d'un outil de prélèvement (10b), **caractérisé en ce qu'**il consiste, à partir du véhicule (1) comprenant en outre au moins deux capteurs de mesure (2) orientés chacun vers l'avant du véhicule (1) suivant un axe de mesure (M1, M2) passant à côté de l'outil de prélèvement (10b) et à partir d'une unité de traitement électronique (4) :
- dans une première étape : à positionner le véhicule (1) devant le front d'attaque (F1) de sorte que l'outil de prélèvement (10b) soit en regard du front d'attaque (F1),
- dans une deuxième étape : à commander de manière continue le déplacement vers le haut du bras de prélèvement (1b) tout en balayant verticalement le plan du front d'attaque (F1) avec les axes de mesure (M1, M2) de manière coordonnée avec le déplacement du bras de prélèvement (1b) pour détecter le bord supérieur (F10) au moment où l'outil de prélèvement (10b) atteint ou atteint sensiblement la hauteur de ce dernier et tout en réalisant à chaque instant, selon une fréquence prédéterminée, à l'aide de chaque capteur de mesure (2), une mesure ponctuelle fournissant une information tout ou rien, à savoir une information de présence ou d'absence de cible (F1, P) sur l'axe de mesure (M1, M2) correspondant, ladite information d'absence de cible correspondant à ladite détection du bord supérieur (F10),
- dans une troisième étape : dès qu'au moins une information d'absence de cible (F1, P) est acquise, à commander l'arrêt du déplacement du bras de prélèvement (1b),
- dans une dernière étape : à commander l'actionnement de l'outil de prélèvement (10b) en vue du prélèvement.

2. Procédé, selon la revendication 1, **caractérisé en ce qu'**il consiste en outre, à l'aide d'un capteur de position permettant de déterminer continuellement la hauteur de bras de prélèvement (1b) lors de son déplacement vertical, à mémoriser dans l'unité de traitement électronique (4) configurée à cet effet, la hauteur du bras de prélèvement (1b) à l'instant où est acquise au moins une information de détection d'absence de cible (F1, P).

3. Procédé, selon la revendication 1 ou 2, **caractérisé en ce que** les capteurs de mesure (2) sont des capteurs de mesure (2) de distance, tels que par exemple des appareils du type télémètre laser, et **en ce qu'**une mesure ponctuelle est une mesure de distance entre un point de la cible (F1, P) et le capteur de mesure (2) de distance correspondant et **en ce qu'**il consiste, pour déterminer chaque information tout ou rien, à calculer la différence entre la distance mesurée à un instant donné avec la distance mesurée à l'instant précédent, puis à comparer le résultat de ladite différence avec une valeur de variation de distance de référence, mémorisée dans l'unité de traitement électronique (4), puis à fournir, si le résultat est inférieur à ladite valeur de variation de distance de référence, une information de présence de cible (F1, P) et, si le résultat est supérieur ou égal à ladite valeur de variation de distance de référence, une information d'absence de cible (F1, P).

4. Véhicule (1) de prélèvement pour le prélèvement du ou des produit(s) (F) dans un tas de produit(s) (F) pour l'alimentation animale, ledit tas de produit(s) (F) présentant un front d'attaque (F1) comportant un bord supérieur (F10), ledit véhicule (1) permettant la mise en oeuvre du procédé selon l'une quelconque des revendications 1 à 3 et comprenant un châssis (1a) supportant à l'avant du véhicule (1) un bras de prélèvement (1b) mobile verticalement et muni d'un outil de prélèvement (10b), **caractérisé en ce qu'**il comprend en outre une chaîne d'acquisition (2, 3, 4) comprenant au moins deux capteurs de mesure (2) orientés chacun vers l'avant du véhicule (1) suivant un axe de mesure (M1, M2) passant à côté de l'outil de prélèvement (10b) et montés de sorte à permettre aux axes de mesures (M1, M2) de suivre le déplacement du bras de prélèvement (1b) de manière coordonnée et une unité traitement électronique (4) configurée pour traiter les informations provenant des capteurs de mesure (2) de sorte à pouvoir, à partir du positionnement du véhicule (1) devant le front d'attaque (F1) de sorte que l'outil de prélèvement (10b) soit en regard du front d'attaque (F1) :
- commander de manière continue le déplacement vers le haut du bras de prélèvement (1b) tout en balayant verticalement le plan du front d'attaque (F1) avec les axes de mesure (M1, M2) de manière coordonnée avec le déplacement du bras de prélèvement (1b) pour détecter le bord supérieur (F10) au moment où l'outil de prélèvement (10b) atteint ou atteint sensiblement la hauteur de ce dernier et tout en réalisant à chaque instant, selon une fréquence prédéterminée, à l'aide de chaque capteur de mesure (2), une mesure ponctuelle fournissant une information tout ou rien, à savoir une information de présence ou d'absence de cible (F1, P) sur l'axe de mesure (M1, M2) correspondant, ladite information d'absence de cible correspondant à ladite détection du bord supérieur (F10),
- dès qu'au moins une information d'absence de cible (F1, P) est acquise, pour commander l'arrêt du déplacement du bras de prélèvement (1b), puis pour commander l'actionnement de l'outil de prélèvement (10b) en vue du prélèvement.

5. Véhicule (1) de prélèvement, selon revendication 4, **caractérisé en ce que** la chaîne d'acquisition (2, 3, 4) comprend en outre un capteur de position permettant de déterminer continuellement la hauteur de bras de prélèvement (1b) lors de son déplacement vertical et **en ce que** l'unité de traitement électronique (4) est configurée pour mémoriser la hauteur du bras de prélèvement (1b) à l'instant où est acquise au moins une information de détection d'absence de cible (F1, P).

6. Véhicule (1) de prélèvement, selon la revendication 4 ou 5, **caractérisé en ce qu'**une mesure ponctuelle est une mesure de distance entre un point de la cible (F1, P) et le capteur de mesure (2) correspondant et **en ce que** chaque capteur de mesure (2) est un capteur de mesure (2) de distance tel que, par exemple, un appareil du type télémètre laser.

7. Véhicule (1) de prélèvement, selon la revendication 6, **caractérisé en ce que** la chaîne d'acquisition (2, 3, 4) est configurée pour que chaque information tout ou rien soit déterminée en calculant la différence entre la distance mesurée à un instant donné avec la distance mesurée à l'instant précédent, puis en comparant le résultat de ladite différence avec une valeur de variation de distance de référence, puis en fournissant, si le résultat est inférieur à ladite valeur de variation de distance de référence, une information de présence de cible (F1, P) et, si le résultat est supérieur ou égal à ladite valeur de variation de distance de référence, une information d'absence de cible (F1, P).

8. Véhicule (1) de prélèvement, selon l'une quelconque des revendications 4 à 7, **caractérisé en ce que** les deux capteurs de mesure (2) sont disposés sur le bras de prélèvement (1b) de manière symétrique par rapport à un plan vertical médian passant par l'axe (X1) du bras de prélèvement (1b).

9. Véhicule (1) de prélèvement, selon l'une quelconque des revendications 4 à 8, **caractérisé en ce que** les deux capteurs de mesure (2) sont orientés et espacés l'un de l'autre de sorte qu'une cible (P) formée par un obstacle situé sur le bord supérieur (F10) et sur l'axe de mesure (M1, M2) de l'un des capteurs de mesure (2) ne puisse pas être située en même temps sur l'axe de mesure (M1, M2) de l'autre ou des autres capteur(s) de mesure (2).

10. Véhicule (1) de prélèvement, selon l'une quelconque des revendications 4 à 9, **caractérisé en ce qu'**il comprend une cuve (C) supportée par le châssis (1a) et le bras de prélèvement (1b) comprend un dispositif de transfert (11b) permettant de déplacer le produit prélevé par l'outil de prélèvement (10b) jusque dans la cuve (C), ledit dispositif de transfert (11b) étant délimité latéralement le long de l'axe (X1) du bras de prélèvement (1b) par deux faces latérales (110b, 111b) opposées et **en ce que** l'un des capteurs de mesure (2) est positionné sur l'une desdites faces latérales (110b) et l'autre capteur de mesure (2) est positionné sur l'autre face latérale (111b).

11. Véhicule (1) de prélèvement, selon l'une quelconque des revendications 4 à 10, **caractérisé en ce que** le bras de prélèvement (1b) est monté en pivotement sur le châssis (1a) et/ou la cuve (C) et comprend une extrémité proximale (12b) articulée sur le châssis (1a) et/ou la cuve (C), une extrémité distale (13b) sur laquelle est monté l'outil de prélèvement (10b) et au moins un actionneur (14b) pour actionner ledit pivotement et **en ce que** les capteurs de mesure (2) sont disposés de sorte à être plus proche de l'extrémité distale (13b) que de l'extrémité proximale (12b).

12. Véhicule (1) de prélèvement, selon l'une quelconque des revendications 4 à 11, **caractérisé en ce qu'**il est autonome et **en ce que** le positionnement du véhicule (1) devant le front d'attaque (F1) de sorte que l'outil de prélèvement (10b) soit en regard du front d'attaque (F1) est commandé par l'unité de traitement électronique (4) configurée à cet effet ou par une autre unité de traitement électronique que peut comprendre le véhicule (1) autonome. 1

## Patentansprüche

1. Verfahren zur zuverlässigen Erfassung der Oberkante (F10) der Vorderseite (F1) eines Futtermittelhaufens (F) zur Tierfütterung von einem Entnahmefahrzeug (1) aus, das ein Gestell (1a) umfasst, das vorne am Fahrzeug (1) einen Entnahmearm (1b) trägt, der vertikal beweglich ist und mit einem Entnahmewerkzeug (10b) ausgestattet ist, **dadurch gekennzeichnet, dass** es von dem Fahrzeug (1) aus, das weiter mindestens zwei Messsensoren (2) umfasst, die jeweils zur Vorderseite des Fahrzeugs (1) gemäß einer Messachse (M1, M2) ausgerichtet sind, die neben dem Entnahmewerkzeug (10b) und ausgehend von einer elektronischen Verarbeitungseinheit (4) verläuft, darin besteht:
- in einem ersten Schritt: das Fahrzeug (1) derart vor der Vorderseite (F1) zu positionieren, dass sich das Entnahmewerkzeug (10b) gegenüber der Vorderseite (F1) befindet,
- in einem zweiten Schritt: die Aufwärtsbewegung des Entnahmearms (1b) kontinuierlich zu steuern, bei gleichzeitigem vertikalem Abtasten der Ebene der Vorderseite (F1) mit den Messachsen (M1, M2) in koordinierter Weise mit der Bewegung des Entnahmearms (1b), um die Oberkante (F10) zu dem Zeitpunkt zu erfassen, wenn das Entnahmewerkzeug (10b) die Höhe dieser Letzteren erreicht oder im Wesentlichen erreicht, und bei gleichzeitigem Ausführen, zu jedem Zeitpunkt, gemäß einer vorbestimmten Frequenz, mithilfe jedes Messsensors (2), einer einmaligen Messung, die eine Information gemäß dem Alles-oder-nichts-Prinzip liefert, das heißt eine Information über Anwesenheit oder Abwesenheit eines Ziels (F1, P) auf der entsprechenden Messachse (M1, M2), wobei die Information über Abwesenheit eines Ziels der Erfassung der Oberkante (F10) entspricht,
- in einem dritten Schritt: sobald mindestens eine Information über Abwesenheit eines Ziels (F1, P) erfasst wird, das Anhalten der Bewegung des Entnahmearms (1b) zu steuern,
- in einem letzten Schritt: die Betätigung des Entnahmewerkzeugs (10b) zur Entnahme zu steuern.

2. Verfahren nach Anspruch 1, **dadurch gekennzeichnet, dass** es weiter mithilfe eines Positionssensors, der eine kontinuierliche Bestimmung der Höhe des Entnahmearms (1b) bei seiner vertikalen Bewegung gestattet, darin besteht, die Höhe des Entnahmearms (1b) in der dazu konfigurierten elektronischen Verarbeitungseinheit (4) zu speichern, zu dem Zeitpunkt an welchem mindestens eine Information über Erfassung der Abwesenheit eines Ziels (F1, P) erfasst wird.

3. Verfahren nach Anspruch 1 oder 2, **dadurch gekennzeichnet, dass** die Messsensoren (2) Distanzmesssensoren (2) sind, wie zum Beispiel Geräte des Typs Laser-Entfernungsmesser, und dadurch, dass eine einmalige Messung eine Distanzmessung zwischen einem Punkt des Ziels (F1, P) und dem entsprechenden Distanzmesssensor (2) ist und dadurch, dass es darin besteht, zum Bestimmen jeder Alles-oder-nichts-Information, die Differenz zwischen der zu einem gegebenen Zeitpunkt gemessenen Distanz und der zum vorherigen Zeitpunkt gemessenen Distanz zu berechnen, dann das Ergebnis der Differenz mit einem Referenzwert der Distanzabweichung, der in der elektronischen Verarbeitungseinheit (4) gespeichert ist, zu vergleichen, und dann eine Information über Anwesenheit eines Ziels (F1, P), wenn das Ergebnis kleiner ist als der Referenzwert der Distanzabweichung, und eine Information über Abwesenheit eines Ziels (F1, P), wenn das Ergebnis größer oder gleich ist dem Referenzwert der Distanzabweichung, vorzulegen.

4. Entnahmefahrzeug (1) zur Entnahme von Futtermittel(n) (F) in einem Futtermittelhaufen (F) zur Tierfütterung, wobei der Futtermittelhaufen (F) eine Vorderseite (F1) aufweist, die eine Oberkante (F10) umfasst, wobei das Fahrzeug (1) die Durchführung des Verfahrens nach irgendeinem der Ansprüche 1 bis 3 gestattet und ein Gestell (1a) umfasst, das vorne am Fahrzeug (1) einen Entnahmearm (1b) trägt, der vertikal beweglich ist und mit einem Entnahmewerkzeug (10b) ausgestattet ist, **dadurch gekennzeichnet, dass** es weiter eine Erfassungskette (2, 3, 4) umfasst, die mindestens zwei Messsensoren (2) umfasst, die jeweils zur Vorderseite des Fahrzeugs (1) gemäß einer Messachse (M1, M2) ausgerichtet sind, die neben dem Entnahmewerkzeug (10b) verläuft, und die so montiert sind, dass sie es den Messachsen (M1, M2) gestatten, die Bewegung des Entnahmearms (1b) in koordinierter Weise zu folgen, und eine elektronische Verarbeitungseinheit (4), die zur Verarbeitung der von den Messsensoren (2) stammenden Informationen konfiguriert ist, um es ihm, ausgehend von der Positionierung des Fahrzeugs (1) vor der Vorderseite (F1), sodass das Entnahmewerkzeug (10b) der Vorderseite (F1) gegenüberliegt, zu gestatten:
- die Aufwärtsbewegung des Entnahmearms (1b) kontinuierlich zu steuern, bei gleichzeitigem vertikalem Abtasten der Ebene der Vorderseite (F1) mit den Messachsen (M1, M2) in koordinierter Weise mit der Bewegung des Entnahmearms (1b), um die Oberkante (F10) zu dem Zeitpunkt zu erfassen, wenn das Entnahmewerkzeug (10b) die Höhe dieser Letzteren erreicht oder im Wesentlichen erreicht, und bei gleichzeitigem Ausführen, zu jedem Zeitpunkt, gemäß einer vorbestimmten Frequenz, mithilfe jedes Messsensors (2), einer einmaligen Messung, die eine Information gemäß dem Alles-oder-nichts-Prinzip liefert, das heißt eine Information über Anwesenheit oder Abwesenheit eines Ziels (F1, P) auf der entsprechenden Messachse (M1, M2), wobei die Information über Abwesenheit eines Ziels der Erfassung der Oberkante (F10) entspricht,
- sobald mindestens eine Information über Abwesenheit eines Ziels (F1, P) erfasst wird, das Anhalten der Bewegung des Entnahmearms (1b) steuert, dann die Betätigung des Entnahmewerkzeugs (10b) zur Entnahme steuert.

5. Entnahmefahrzeug (1) nach Anspruch 4, **dadurch gekennzeichnet, dass** die Erfassungskette (2, 3, 4) weiter einen Positionssensor zur kontinuierlichen Bestimmung der Höhe des Entnahmearms (1b) bei seiner vertikalen Bewegung umfasst, und dadurch, dass die elektronische Verarbeitungseinheit (4) konfiguriert ist, um die Höhe des Entnahmearms (1b) zu dem Zeitpunkt zu speichern, wenn mindestens eine Information über Erfassung der Abwesenheit eines Ziels (F1, P) erfasst wird.

6. Entnahmefahrzeug (1) nach Anspruch 4 oder 5, **dadurch gekennzeichnet, dass** eine einmalige Messung eine Distanzmessung zwischen einem Punkt des Ziels (F1, P) und dem entsprechenden Messsensor (2) ist, und dadurch, dass jeder Messsensor (2) ein Distanzmesssensor (2), wie zum Beispiel ein Gerät des Typs Laser-Entfernungsmesser, ist.

7. Entnahmefahrzeug (1) nach Anspruch 6, **dadurch gekennzeichnet, dass** die Erfassungskette (2, 3, 4) konfiguriert ist, damit jede Alles-oder-nichts-Information bestimmt wird, indem die Differenz zwischen der zu einem gegebenen Zeitpunkt gemessenen Distanz und der zum vorherigen Zeitpunkt gemessenen Distanz berechnet wird, dann das Ergebnis der Differenz mit einem Referenzwert der Distanzabweichung verglichen wird und dann eine Information über Anwesenheit eines Ziels (F1, P), wenn das Ergebnis kleiner ist als der Referenzwert der Distanzabweichung, und eine Information über Abwesenheit eines Ziels (F1, P), wenn das Ergebnis größer oder gleich ist dem Referenzwert der Distanzabweichung vorgelegt wird.

8. Entnahmefahrzeug (1) nach irgendeinem der Ansprüche 4 bis 7, **dadurch gekennzeichnet, dass** die zwei Messsensoren (2) auf dem Entnahmearm (1b) symmetrisch in Bezug auf eine vertikale Mittelebene, die durch die Achse (X1) des Entnahmearms (1b) verläuft, angeordnet sind.

9. Entnahmefahrzeug (1) nach irgendeinem der Ansprüche 4 bis 8, **dadurch gekennzeichnet, dass** die zwei Messsensoren (2) so ausgerichtet und voneinander beabstandet sind, dass sich ein Ziel (P), das von einem Hindernis gebildet wird, das sich auf der Oberkante (F10) und auf der Messachse (M1, M2) von einem der Messsensoren (2) befindet, nicht gleichzeitig auf der Messachse (M1, M2) des anderen oder der anderen Messsensor(s)(en) (2) befinden kann.

10. Entnahmefahrzeug (1) nach irgendeinem der Ansprüche 4 bis 9, **dadurch gekennzeichnet, dass** es einen Behälter (C) umfasst, der von dem Gestell (1a) getragen wird, und dass der Entnahmearm (1b) eine Übertragungsvorrichtung (11b) umfasst, die es ermöglicht, das von dem Entnahmewerkzeug (10b) entnommene Futtermittel bis in den Behälter (C) zu bewegen, wobei die Übertragungsvorrichtung (11b) seitlich entlang der Achse (X1) des Entnahmearms (1b) von zwei gegenüberliegenden Seitenflächen (110b, 111b) begrenzt wird, und dadurch, dass einer der Messsensoren (2) auf einer der Seitenflächen (110b) positioniert ist und der andere Messsensor (2) auf der anderen Seitenfläche (111b) positioniert ist.

11. Entnahmefahrzeug (1) nach irgendeinem der Ansprüche 4 bis 10, **dadurch gekennzeichnet, dass** der Entnahmearm (1b) schwenkbar auf dem Gestell (1a) und/oder dem Behälter (C) montiert ist und ein proximales Ende (12b), das auf dem Gestell (1a) und/oder dem Behälter (C) angelenkt ist, ein distales Ende (13b), auf dem das Entnahmewerkzeug (10b) montiert ist, und mindestens ein Betätigungselement (14b) zum Betätigen des Schwenkvorgangs umfasst, und dadurch, dass die Messsensoren (2) so angeordnet sind, dass sie dem distalen Ende (13b) näher sind als dem proximalen Ende (12b).

12. Entnahmefahrzeug (1) nach irgendeinem der Ansprüche 4 bis 11, **dadurch gekennzeichnet, dass** es autonom ist und dadurch, dass die Positionierung des Fahrzeugs (1) vor der Vorderseite (F1), sodass das Entnahmewerkzeug (10b) der Vorderseite (F1) gegenüberliegt, von der dazu konfigurierten elektronischen Verarbeitungseinheit (4) oder von einer anderen elektronischen Verarbeitungseinheit, welche das autonome Fahrzeug (1) umfassen kann, gesteuert wird.

## Claims

1. Process for reliable detection of the top edge (F10) of the heading face (F1) of a pile of product(s) (F) for animal feeding, from an extraction vehicle (1) comprising a chassis (1a) supporting, at the front of the said vehicle (1), an extraction arm (1b) that is mobile vertically and equipped with an extraction tool (10b), **characterized in that** it consists, from the vehicle (1) also comprising at least two measurement sensors (2) each oriented toward the front of the vehicle (1) along a measurement axis (M1, M2) that passes alongside the extraction tool (10b) and from an electronic processing unit (4):
- in a first phase: of positioning the vehicle (1) in front of the heading face (F1) so that the extraction tool (10b) is facing the heading face (F1),
- in a second phase: of continuously controlling the upward motion of the extraction arm (1b) while vertically scanning the plane of the heading face (F1) with the axes of measurement (M1, M2) in a manner coordinated with the motion of the extraction arm (1b) in order to detect the top edge (F10) at the moment when the extraction tool (10b) reaches or approximately reaches the height of it and while constantly taking, according to a predetermined frequency, using each measurement sensor (2), a one-time measurement supplying all-or-nothing information, i.e. information indicating the presence or absence of a target (F1, P) on the corresponding axis of measurement (M1, M2), the said information indicating the absence of target corresponding to the said detection of the top edge (F10),
- in a third phase: as soon as at least one information indicating the absence of a target (F1, P) is acquired, of ordering the motion of the extraction arm to stop (1b),
- in a last phase: of controlling the actuation of the extraction tool (10b) for extraction.

2. Process, according to claim 1, **characterized in that** it also consists, using a position sensor to continuously determine the height of the extraction arm (1b) during its vertical motion, of storing in the electronic processing unit (4) configured for this purpose the height of the extraction arm (1b) at the moment when at least one information detecting the absence of a target (F1, P) is acquired.

3. Process, according to claim 1 or 2, **characterized in that** the measurement sensors (2) are distance-measurement sensors (2), such as for example apparatuses of the laser telemeter type, and **in that** a one-time measurement is a distance measurement between a point of the target (F1, P) and the corresponding distance-measurement sensor (2) and **in that** it consists, in order to determine each all-or-nothing information, of calculating the difference between the distance measured at a given moment and the distance measured at the previous moment, then comparing the result of the said difference with a reference distance variation value, stored in the electronic processing unit (4), then, if the result is lower than the said reference distance variation value, supplying an information about the presence of a target (F1, P) and, if the result is equal to or greater than the said reference distance variation value, supplying an information indicating the absence of a target (F1, P).

4. Extraction vehicle (1) for the extraction of product(s) (F) in a pile of product(s) (F) for animal feeding, the said pile of product(s) (F) having a heading face (F1) comprising a top edge (F10), the said vehicle (1) enabling the implementation of the process according to any of claims 1 to 3 and comprising a chassis (1a) that supports at the front of the vehicle (1) an extraction arm (1b) that is mobile vertically and equipped with an extraction tool (10b), **characterized in that** it also comprises an acquisition chain (2, 3, 4) comprising at least two measurement sensors (2) each oriented toward the front of the vehicle (1) along an axis of measurement (M1, M2) passing alongside the extraction tool (10b) and mounted so as to permit the axes of measurements (M1, M2) to follow the motion of the extraction arm (1b) in a coordinated manner and an electronic processing unit (4) configured to process the data from the measurement sensors (2) so as to be able, from the positioning of the vehicle (1) in front of the heading face (F1) so that the extraction tool (10b) is facing the heading face (F1):
- to continuously control the upward motion of the extraction arm (1b) while vertically scanning the plane of the heading face (F1) with the axes of measurement (M1, M2) in a manner coordinated with the motion of the extraction arm (1b) in order to detect the top edge (F10) at the moment when the extraction tool (10b) reaches or approximately reaches the height of it and while constantly taking, according to a predetermined frequency, using each measurement sensor (2), a one-time measurement supplying an all-or-nothing information, i.e. an information indicating the presence or absence of a target (F1, P) on the corresponding axis of measurement (M1, M2), the said information indicating the absence of a target corresponding to the said detection of the top edge (F10),
- as soon as at least one information indicating the absence of a target (F1, P) is acquired, to order the motion of the extraction arm (1b) to stop, then to control the actuation of the extraction tool (10b) for extraction.

5. Extraction vehicle (1), according to claim 4, **characterized in that** the acquisition chain (2, 3, 4) also comprises a position sensor making it possible to continuously determine the height of the extraction arm (1b) during its vertical motion and **in that** the electronic processing unit (4) is configured to store the height of the extraction arm (1b) at the moment when at least one information detecting the absence of a target (F1, P) is acquired.

6. Extraction vehicle (1), according to claim 4 or 5, **characterized in that** a one-time measurement is a distance measurement between a point of the target (F1, P) and the corresponding measurement sensor (2) and that each measurement sensor (2) is a distance-measurement sensor (2) such as, for example, an apparatus of the laser telemeter type.

7. Extraction vehicle (1), according to claim 6, **characterized in that** the acquisition chain (2, 3, 4) is configured so that each all-or-nothing information is determined by calculating the difference between the distance measured at a given moment and the distance measured at the previous moment, then by comparing the result of the said difference with a reference distance variation value, then, if the result is lower than the said reference distance variation value, by supplying an information about the presence of a target (F1, P) and, if the result is equal to or greater than the said reference distance variation value, by supplying an information indicating the absence of a target (F1, P).

8. Extraction vehicle (1), according to any of claims 4 to 7, **characterized in that** the two measurement sensors (2) are positioned on the extraction arm (1b) symmetrically with respect to a median vertical plane passing through the axis (X1) of the extraction arm (1b).

9. Extraction vehicle (1), according to any of claims 4 to 8, **characterized in that** the two measurement sensors (2) are oriented and spaced from each other so that a target (P) made up of an obstacle located on the top edge (F10) and on the axis of measurement (M1, M2) of one of the measurement sensors (2) cannot be located at the same time on the axis of measurement (M1, M2) of the other measurement sensor(s) (2).

10. Extraction vehicle (1), according to any of claims 4 to 9, **characterized in that** it comprises a tank (C) supported by the chassis (1a), and **in that** the extraction arm (1b) comprises a transfer device (11b) making it possible to move the product extracted by the extraction tool (10b) into the tank (C), the said transfer device (11b) being delimited laterally along the axis (X1) of the extraction arm (1b) by two opposite side faces (110b, 111b) and **in that** one of the measurement sensors (2) is positioned on one of the said side faces (110b) and the other measurement sensor (2) is positioned on the other side face (111b).

11. Extraction vehicle (1), according to any of claims 4 to 10, **characterized in that** the extraction arm (1b) is mounted in pivoting fashion on the chassis (1a) and/or the tank (C) and comprises a proximal end (12b) articulated on the chassis (1a) and/or the tank (C), a distal end (13b) on which the extraction tool (10b) is mounted and at least one actuator (14b) to actuate the said pivoting and **in that** the measurement sensors (2) are positioned so as to be closer to the distal end (13b) than the proximal end (12b).

12. Extraction vehicle (1), according to any of claims 4 to 11, **characterized in that** it is autonomous and **in that** the positioning of the vehicle (1) in front of the heading face (F1) so that the extraction tool (10b) is facing the heading face (F1) is controlled by the electronic processing unit (4) configured for this purpose or by another electronic processing unit that the autonomous vehicle (1) may contain.
